# NOUVEAU FASCICULE DE BREVET EUROPEEN

(11) **EP 0 667 266 B2**
(45) Date de publication et mention de la décision concernant l'opposition: **10.07.2002**
(45) Mention de la délivrance du brevet: 02.09.1998
(21) Numéro de dépôt: 95101288.9
(22) Date de dépôt: 31.01.1995
(51) Int. Cl.: B60S 1/38

(54) **Raclette d'essuyage pour un balai d'essuie-glace de véhicule automobile**
Wischblatt für den Scheibenwischer eines Kraftfahrzeuges
Wiper blade for a windscreen wiper on a motor vehicle

(30) Priorité: 11.02.1994 FR 9401676
(43) Date de publication de la demande: 16.08.1995
(60) Demande divisionnaire: 98400411.9
(73) Titulaire: VALEO SYSTEMES D'ESSUYAGE, 78321 La Verrière (FR)
(72) Inventeur: Mege, Bernard, F-63000 Clermont-Ferrand (FR); Sortais, Jean-Luc, F-63110 Beaumont (FR)

(56) Documents cités:
- EP-A- 0 158 070
- EP-A- 0 260 809
- DE-U- 1 813 417
- FR-A- 2 502 086
- GB-A- 901 282
- US-A- 4 177 538

## Description

La présente invention concerne une raclette d'essuyage pour un balai d'essuie-glace, notamment de véhicule automobile.

L'invention concerne plus particulièrement une raclette d'essuyage du type décrit et représenté dans le document FR-A-2.502.086, comportant une partie supérieure d'accrochage qui est prévue pour être reliée à une structure de support appartenant à un balai de l'essuie-glace et qui comporte un talon supérieur en matériau élastomère renforcé par deux vertèbres longitudinales de rigidification dont chacune est réalisée sous la forme d'une bande de métal qui est insérée transversalement dans une rainure longitudinale du talon qui débouche dans une face de ce dernier, la vertèbre comportant des moyens pour son immobilisation longitudinale par rapport au talon.

Dans le mode de réalisation décrit et représenté dans ce document, les moyens d'immobilisation longitudinale de chaque vertèbre par rapport au corps en matériau élastomère du talon sont constitués par une paire de dents qui s'étendent transversalement en saillie depuis le bord longitudinal de la vertèbre reçu dans le fond de la rainure latérale correspondante du talon.

En variante, les dents peuvent être remplacées par un grand nombre de dents plus petites réalisées par exemple sous forme d'un crantage.

Commme on peut le voir sur la figure 5 de ce document, les dents s'étendent profondément à l'intérieur de la bande médiane de liaison qui délimite les fonds opposés des rainures latérales du talon et elles s'étendent sensiblement en vis-à-vis les unes des autres, par paires.

Il en résulte que la partie de la bande médiane de liaison dans laquelle pénètrent les dents est fragilisée de manière importante lors de la mise en place des vertèbres, les opérations pouvant aboutir à un déchirement de la bande médiane de liaison dans cette zone.

De plus, lors de la mise en place de la raclette d'essuyage dans les griffes formées aux extrémités des étriers de support de la raclette, il se produit un effort de traction longitudinale des vertèbres par rapport au talon lors de l'enclenchement de la griffe d'extrémité reçue dans les encoches d'immobilisation de cette dernière formées dans les bords longitudinaux extérieurs des vertèbres. Du fait de la pénétration importante des dents dans la bande médiane de liaison, l'effort de traction produit également un déchirement local de la bande médiane de liaison pouvant aboutir à une désolidarisation de la raclette d'essuyage.

Afin de remédier à ces inconvénients, l'invention propose une raclette d'essuyage selon la revendication 1.

Selon divers modes de réalisation de l'invention :
- les crampons sont réalisés venus de matière avec la vertèbre ;
- les crampons sont des empreintes en relief formées sur la vertèbre ;
- les crampons sont réalisés par découpage, par emboutissage et/ou par repoussage ;
- la vertèbre est réalisée en métal, notamment en acier inoxydable.

Grâce à la conception selon l'invention des vertèbres de renfort selon laquelle il est prévu un grand nombre de crampons dont chacun peut être de petites dimensions, on peut assurer une parfaite tenue longitudinale de la vertèbre par rapport au talon de la raclette d'essuyage tout en évitant d'endommager le matériau constitutif du talon, et notamment la bande médiane de liaison.

D'autres caractéristiques et avantages de l'invention apparaîtront à la lecture de la description détaillée qui va suivre pour la compréhension de laquelle on se reportera aux dessins annexés dans lesquels:
- La figure 1 est une vue en perspective partiellement éclatée d'un tronçon d'une raclette qui n'est pas conforme aux enseignements de l'invention;
- la figure 2 est une vue similaire à celle de la figure 1 illustrant la raclette d'essuyage en position montée dans un étrier de support appartenant à un balai d'essuie-glace ;
- les figures 3 et 4 sont deux vues schématiques en perspective, qui elles-mêmes ne sont pas conformes aux enseignements de l'invention, permettant d'illustrer un exemple d'un procédé de réalisation des crampons formés sur les vertèbres de renfort qui équipent la raclette d'essuyage illustrée à la figure 1 ; et
- les figures 5 à 8 sont des vues schématiques en perspective illustrant quatre modes de réalisation des crampons d'immobilisation des vertèbres selon l'invention.

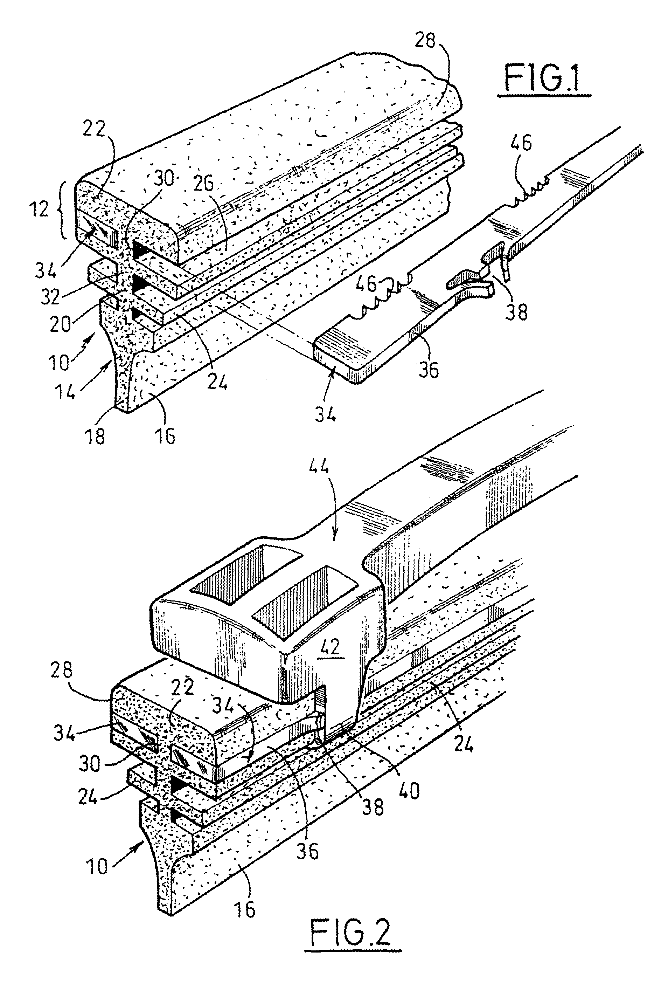

On reconnaît sur la figure 1 une raclette d'essuyage 10 qui comporte une partie supérieure 12 prévue pour être reliée à une structure de support appartenant à un balai d'essuie-glace (voir figure 2) et une partie inférieure 14 d'essuyage qui est pour l'essentiel constituée par une lame d'essuyage 16 en forme de flèche renversée dont la pointe 18 est prévue pour coopérer avec la surface de la vitre à essuyer.

La partie supérieure 12 est reliée à la partie inférieure 14 par une bande médiane de liaison 20 qui confère sa souplesse à la partie inférieure d'essuyage.

La partie supérieure 12 de liaison est pour l'essentiel constituée par un talon massif en matériau élastomère 20 qui est réalisé venu de matière par extrusion avec la partie inférieure d'essuyage 14 et avec les ailes latérales de renfort 24 qui s'étendent transversalement depuis la bande médiane de liaison 20.

Le corps massif 22 qui s'étend longitudinalement comporte deux rainures longitudinales opposées 26 qui débouchent chacune dans une des faces latérales 28 du talon et dont les fonds en vis-à-vis 30 délimitent entre eux une bande médiane supérieure de liaison 32.

Chacune des rainures 26 est prévue pour recevoir une vertèbre longitudinale de rigidification 34.

Selon une technique connue, chaque vertèbre 34 est réalisée sous la forme d'une bande d'acier inoxydable de forme générale rectangulaire dont les dimensions correspondent sensiblement à celles d'une rainure longitudinale 26 dans laquelle elle est reçue pour renforcer le talon supérieur de liaison 22.

Chaque vertèbre 34 comporte, sur son bord longitudinal extérieur 36 une encoche 38, réalisée par découpage, qui est prévue pour recevoir une branche verticale 40 appartenant à une griffe 42 formée à l'extrémité d'un étrier de support 44, comme cela est illustré sur la figure 2, de manière à immobiliser les vertèbres 34 par rapport à l'étrier 44.

L'immobilisation globale de la raclette 10 par rapport à l'étrier 44 est assurée indirectement par l'immobilisation longitudinale des vertèbres 34 par rapport au corps en matériau élastomère du talon 22.

A cet effet, chaque vertèbre 34 comporte une série de crampons d'immobilisation longitudinale 46.

Dans le premier mode de réalisation illustré notamment aux figures 1, 3 et 4, les crampons 46 sont formés et agencés le long du bord longitudinal 48 de chaque vertèbre 34 qui est reçue contre le fond 30 de la rainure latérale 26 du talon 22.

La série de crampons 46 constitue une zone d'accrochage longitudinal de la vertèbre 34 par rapport au talon 22, chaque crampon 46 ne pénétrant que très légèrement dans le matériau élastomère constitutif de la bande supérieure médiane de liaison 32 et ne fragilisant donc cette dernière en aucune manière.

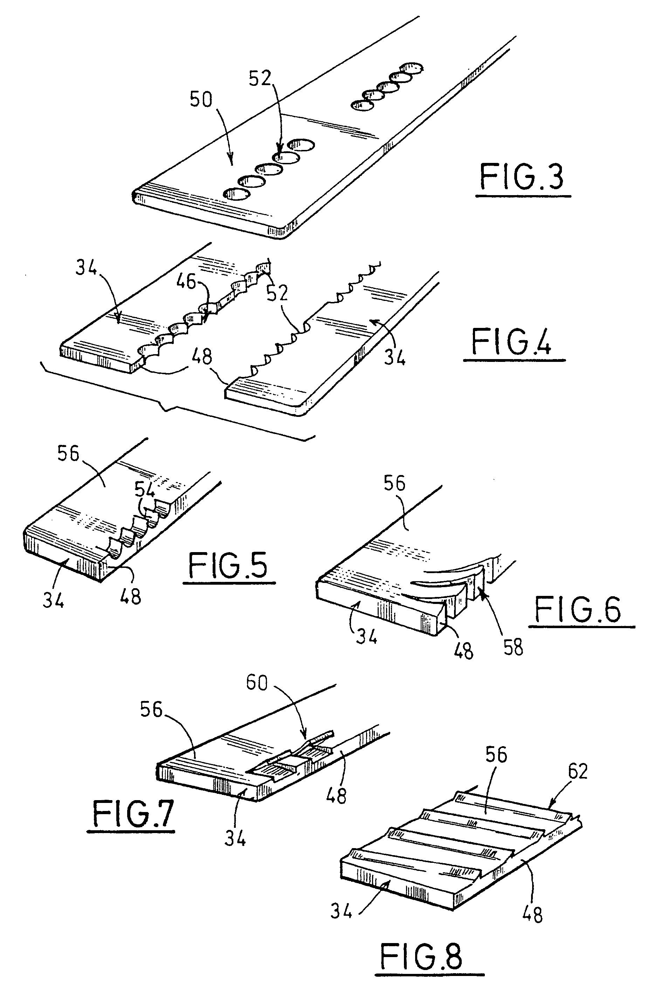

Comme on l'a représenté aux figures 3 et 4, il est possible de réaliser simultanément une paire de vertèbres 34 en partant d'une plaque en acier inoxydable 50 dans laquelle on forme initialement une série de trous transversaux débouchant 52 le long de l'axe médian de la plaque, puis que l'on coupe en deux pour obtenir deux vertèbres 34 comportant chacune un bord longitudinal 48 dans lequel débouchent les bords diamétraux tranchés des trous 52 pour constituer les crampons 46.

Les crampons 46 illustrés aux figures 1 et 4 peuvent également être réalisés selon tout autre procédé, et notamment directement par découpage, emboutissage et/ou repoussage le long du bord longitudinal d'une vertèbre 34.

Dans la réalisation illustrée sur la figure 5, des crampons 54 sont illustrés sous la forme d'une série d'empreintes formées sur la face supérieure plane 56 de la vertèbre et au voisinage du bord longitudinal 48.

Ce type de crampons réalisés par empreinte peut être formé par tous moyens connus, et notamment par repoussage ou roulage d'un outil de forme complémentaire sur la face supérieure 56.

Dans le mode de réalisation de la figure 6, les crampons 58 sont réalisés en partie dans le bord longitudinal 48 et en partie dans la face supérieure 56 par découpage et/ou repoussage simultané au moyen d'un outil (non représenté) en forme de peigne qui pénètre transversalement dans la matière du bord longitudinal 48.

Dans le mode de réalisation illustré sur la figure 7, les crampons 60 sont illustrés sous la forme de pattes découpées dans la face supérieure 56 et qui sont redressées pour faire saillie par rapport au plan de la face supérieure 56.

Enfin, dans le mode de réalisation illustré sur la figure 8, les crampons 62 sont formés sur la face supérieure 56, sur toute la largeur de cette dernière, et sont illustrés sous la forme de crans transversaux qui sont par exemple réalisés par roulage sur la face supérieure d'un outil de forme complémentaire.

L'invention n'est pas limitée aux modes de réalisation qui viennent d'être décrits ni aux techniques de réalisation mentionnées précédemment.

L'invention trouve également à s'appliquer dans le cas où les vertèbres de renfort sont réalisées en matière plastique, les crampons pouvant être alors réalisés venus de matière par moulage.

## Revendications

1. Raclette d'essuyage (10) pour un balai d'essuie-glace, notamment de véhicule automobile, du type comportant une partie supérieure d'accrochage (12) qui est prévue pour être reliée à une structure de support (44) appartenant au balai d'essuie-glace et qui comporte un talon supérieur (22) en matériau élastomère renforcé par au moins une vertèbre longitudinale de rigidification (34) réalisée sous la forme d'une bande longitudinale qui est insérée transversalement dans une rainure longitudinale (26) du talon (22) qui débouche dans une face (28) de ce dernier, la vertèbre (34) comportant des moyens pour son immobilisation longitudinale par rapport au talon, **caractérisée en ce que** lesdits moyens sont constitués par une série de crampons (46, 54, 58, 60, 62), agencés longitudinalement le long d'au moins l'une des faces principales (56) de la vertèbre (34), qui coopèrent avec le matériau du talon (22), chaque crampon ne pénétrant que très légèrement dans le matériau du talon (22) de manière à ne pas le fragiliser.

2. Raclette d'essuyage selon l'une quelconque des revendications précédentes, **caractérisée en ce que** les crampons sont réalisés venus de matière avec la vertèbre (34).

3. Raclette d'essuyage selon l'une quelconque des revendications précédentes, **caractérisée en ce que** les crampons sont des empreintes en relief formées sur la vertèbre (34).

4. Raclette d'essuyage selon l'une des revendications 2 ou 3, **caractérisée en ce que** les crampons sont réalisés par découpage.

5. Raclette d'essuyage selon l'une des revendications 2 ou 3, **caractérisée en ce que** les crampons sont réalisés par emboutissage.

6. Raclette d'essuyage selon l'une quelconque des revendications précédentes, **caractérisée en ce que** les crampons sont réalisés par repoussage,

7. Raclette d'essuyage selon l'une quelconque des revendications précédentes, **caractérisée en ce que** la vertèbre (34) est réalisée en métal, notamment en acier inoxydable.

## Patentansprüche

1. Wischblatt (10) für einen Scheibenwischer, insbesondere eines Kraftfahrzeugs, umfassend einen oberen Einhakteil (12), der für die Verbindung mit einer Tragstruktur (44) vorgesehen ist, die zum Scheibenwischer gehört, und der einen oberen Steg (22) aus Elastomermaterial umfasst, der durch mindestens eine Längsversteifungsleiste (34) verstärkt ist, die in Form eines Längsbands ausgeführt ist, das quer in eine Längsnut (26) des Stegs (22) eingefügt ist, die in einer Fläche (28) dieses Stegs mündet, wobei die Versteifungsleiste (34) Mittel für ihre Längssicherung im Verhältnis zum Steg aufweist, **dadurch gekennzeichnet, dass** die besagten Mittel aus einer Reihe von in Längsrichtung angeordneten Klammem (46, 54, 58, 60, 62) bestehen, entlang mindestens einer der Hauptflächen (56) der Versteifungsleiste (34) angeordnet sind, und die mit dem Material des Stegs (22) zusammenwirken, wobei jede Klammer nur sehr leicht in das Material des Stegs (22) eindringt, um ihn nicht zu verschwächen.

2. Wischblatt nach einem der vorangehenden Ansprüche, **dadurch gekennzeichnet, dass** die Klammem einstückig mit der Versteifungsleiste (34) ausgeführt sind.

3. Wischblatt nach einem der vorangehenden Ansprüche, **dadurch gekennzeichnet, dass** die Klammem auf der Versteifungsleiste (34) ausgebildete Reliefprägungen sind.

4. Wischblatt nach einem der Ansprüche 2 oder 3, **dadurch gekennzeichnet, dass** die Klammem durch Stanzen ausgeführt sind.

5. Wischblatt nach einem der Ansprüche 2 oder 3, **dadurch gekennzeichnet, dass** die Klammern durch Tiefziehen ausgeführt sind.

6. Wischblatt nach einem der vorangehenden Ansprüche, **dadurch gekennzeichnet, dass** die Klammern durch Drücken ausgeführt sind.

7. Wischblatt nach einem der vorangehenden Ansprüche, **dadurch gekennzeichnet, dass** die Versteifungsleiste (34) aus Metall, insbesondere aus nichtrostendem Stahl, ausgeführt ist.

## Claims

1. A wiping strip (10) for a screen wiper blade, especially for a motor vehicle, of the type comprising, at the top, an attachment portion (12) which is arranged to be connected to a support structure (44) which is part of the screen wiper blade and which includes a top claw (22) of elastomeric material reinforced by at least one longitudinal stiffening rib (34) made in the form of a longitudinal strip which is inserted transversely into a longitudinal groove (26) in the claw (22), which is open in a face (28) of the latter, the rib (34) including means for retaining it against longitudinal movement with respect to the claw, **characterised in that** the said means consist of a set of longitudinally disposed serrated elements (46, 54, 58, 60, 60) are arranged along at least one of the main faces (56) of the rib (34), and which cooperate with the material of the claw (22), with each serrated element penetrating only very slightly into the material of the claw (22), so as not to weaken it.

2. A wiping strip according to any one of the preceding Claims, **characterised in that** the serrated elements are formed integrally with the rib (34).

3. A wiping strip according to any one of the preceding Claims, **characterised in that** the serrated elements are impressed elements formed in relief on the rib (34).

4. A wiping strip according to Claim 2 or 3, **characterised in that** the serrated elements are formed by cutting out.

5. A wiping strip according to any one of the Claims 2 or 3, **characterised in that** the serrated elements are formed by stamping.

6. A wiping strip according to any one of the preceding Claims, **characterised in that** the serrated elements are embossed.

7. A wiping strip according to any one of the preceding Claims, **characterised in that** the rib (34) is made of metal, especially stainless steel.
